# EUROPÄISCHE PATENTSCHRIFT

(11) **EP 2 794 126 B1**
(45) Veröffentlichungstag und Bekanntmachung des Hinweises auf die Patenterteilung: **06.09.2017**
(21) Anmeldenummer: 12806034.0
(22) Anmeldetag: 17.12.2012
(51) Int. Cl.: B05D 3/06, B05D 5/02, B05D 3/02, B05D 3/04, C09D 133/08, C09D 133/14

(54) **VERFAHREN ZUR HERSTELLUNG HOMOGEN MATTIERTER BESCHICHTUNGEN MITTELS STRAHLENHÄRTUNG**
METHOD FOR PRODUCING HOMOGENEOUS MATT COATINGS BY MEANS OF UV CURING
PROCÉDÉ DE FABRICATION DE REVÊTEMENTS MATIFIÉS HOMOGÈNES À L'AIDE D'UN DURCISSEMENT PAR RAYONNEMENT

(30) Priorität: 20.12.2011 EP 11194422
(43) Veröffentlichungstag der Anmeldung: 29.10.2014
(73) Patentinhaber: Akzo Nobel Coatings International B.V., 6824 BM Arnhem (NL); Allnex IP S.à.r.l., 1660 Luxembourg (LU)
(72) Erfinder: FISCHER, Wolfgang, 40668 Meerbusch (DE); YUVA, Nusret, 51399 Burscheid (DE); KEWELOH, Ludger, 48324 Sendenhorst (DE); MEIER, Antje, 49134 Wallenhorst (DE)
(74) Vertreter: Akzo Nobel IP Department
(86) Internationale Anmeldenummer: PCT/EP2012/075846
(87) Internationale Veröffentlichungsnummer: WO 2013/092521

(56) Entgegenhaltungen:
- WO-A1-81/00683
- DE-A1-102006 042 063
- DE-A1-102008 024 149
- BAUER F ET AL: "UV curing and matting of acrylate nanocomposite coatings by 172nm excimer irradiation, Part 2", PROGRESS IN ORGANIC COATINGS, ELSEVIER BV, NL, Bd. 69, Nr. 3, 1. November 2010 (2010-11-01), Seiten 287-293, XP027235761, ISSN: 0300-9440 [gefunden am 2010-08-01]

## Beschreibung

Die vorliegende Erfindung betrifft ein Verfahren zur Herstellung von matten und kratzfesten Beschichtungen, das unter Einwirkung aktinischer Strahlung auf aktivierte Doppelbindungen enthaltende Beschichtungssysteme unter radikalischer Polymerisation erfolgt.

Die Härtung von aktivierten Doppelbindungen enthaltenden Beschichtungssysteme durch aktinische Strahlung, wie z.B. UV-Licht oder auch Elektronenstrahlung ist bekannt und technisch etabliert. Unter aktinischer Strahlung wird elektromagnetische, ionisierende Strahlung verstanden, insbesondere Elektronenstrahlen, UV-Strahlen sowie sichtbares Licht (Roche Lexikon Medizin, 4.Auflage; Urban & Fischer Verlag, München 1999). Es ist eine der schnellsten Härtungsmethoden in der Beschichtungstechnologie. Auf diesem Prinzip basierende Beschichtungsmittel werden daher als strahlen- oder aktinisch-härtende bzw. härtbare Systeme bezeichnet.

Eine Ausführungsform strahlenhärtender Beschichtungssysteme sind Formulierungen, bei denen alle Bestandteile durch radikalische Polymerisation vernetzen, sogenannte Systeme mit einem Festkörpergehalt von 100 Gew.-%. Durch die Abwesenheit flüchtiger Bestandteile reduziert sich die aufgetragene Schichtstärke dieser Systeme mit einem Festkörpergehalt von 100 Gew.-% während des Härtungsprozesses nur geringfügig. Dieser geringfügige Schrumpf erschwert die Erzeugung matter Oberflächen durch einfache Zugabe herkömmlicher Mattierungsmittel zur Lackformulierung. Eine Alternative zur Erzeugung von matten Oberflächen mit den vorgenannten Beschichtungssystemen ist beispielsweise die mechanische Strukturierung der nicht gehärteten Oberflächen mittels entsprechend strukturierten Walzen oder durch Auflage von Folien mit definierter Struktur, wie z.B. in EP-A 1 914 215 oder EP-A 0 578 957 offenbart. Die Folien mit definierter Struktur werden nach der Aushärtung des Lackes wieder entfernt. Solche Verfahren sind jedoch schwierig hinsichtlich Reproduzierbarkeit und sehr aufwändig in der Handhabung anzuwenden.

Zur Erzeugung tiefmatter Oberflächen von Beschichtungen ist weiterhin bekannt, strahlenhärtbare Beschichtungssysteme mit hochenergetischer Strahlung im Wellenlängenbereich von < 230 nm vorzubehandeln, wie beispielsweise in Schubert et al. Farbe + Lack 117/5 (2011) S. 21 ff, Bauer et al. Progress in Org. Coatings 69 (2010) S. 287-293 und Bauer et al. Progress in Org. Coatings 64 (2009) S 474-481 offenbart. Der Effekt, der durch diese Vorbehandlung mit kurzwelligem UV-Licht im Bereich ≤ 230 nm erzielt wird, ist eine photochemisch erzeugte Mikrofaltung der Beschichtung. Diese Mikrofaltung ist verantwortlich für eine tiefmatte Oberfläche (siehe z.B. DE 10 2006 042 063 A1). Ein zweistufiges Verfahren zum Einstellen des Glanzgrades einer Beschichtung ist aus der WO 81/00683 A1 bekannt. Anschließend erfolgt die Durchhärtung der Lackschicht unter der gefalteten Oberfläche mit herkömmlichen UV-Strahlern wie beispielsweise Quecksilber-Mitteldruckstrahlern oder Elektronenstrahlern.

Dieses Verfahren zur Mattierung ist jedoch nur für Beschichtungen geeignet, die in geringen Schichtstärken bis ca. 20 µm aufgetragen werden. Bei höheren Schichtstärken über ca. 20 µm tritt eine heterogene Runzelbildung auf, die zu rauhen, defekten und nicht akzeptablen Oberflächenstrukturen führt. Für Schichtstärken über 20 µm ist daher das bislang bekannte Verfahren nicht geeignet, da die Oberflächenstruktur inakzeptabel ist.

Daher war Aufgabe der vorliegenden Erfindung ein einfaches Verfahren zur Herstellung von homogenen tiefmatten Beschichtungen bereitzustellen, das auch für strahlenhärtbare Beschichtungen mit Schichtstärken von über 20 µm geeignet ist.
Überraschenderweise wurde nun gefunden, dass homogene und tiefmatte Beschichtungen auch bei Dickschichtanwendung möglich sind, wenn das entsprechende strahlenhärtbare Beschichtungsmittel in einem vorgelagerten Schritt mit langwelliger UV-Strahlung bestrahlt wird, was eine Vorgelierung des Beschichtungsmittels zur Folge hat.
Gegenstand der Erfindung ist demnach ein Verfahren zur Herstellung matter Beschichtungen dadurch gekennzeichnet, dass
(1) ein strahlenhärtbares Beschichtungsmittel auf ein Substrat aufgetragen wird,
(2) die strahlenhärtbare Beschichtung aus Schritt (1) mit UV-Licht der Wellenlänge von ≥ 200 nm bis ≤ 420 nm, vorzugsweise von ≥ 280 nm bis ≤ 420 nm bei einer Strahlendosis von 25 bis 120 mJ/cm², vorzugsweise von 30 bis 100 mJ/cm² bestrahlt wird,
(3) die aus Schritt (2) erhaltene Beschichtung mit LTV-Licht der Wellenlänge von ≥ 120 nm bis ≤ 230 nm, vorzugsweise von ≥ 150 nm bis ≤ 225 nm, besonders bevorzugt von 172 nm bestrahlt wird, und
(4) die aus Schritt (3) erhältliche Beschichtung mittels aktinischer Strahlung endgehärtet wird.
wobei in Schritt (1) das Beschichtungsmittel in einer Schichtdicke von ≥ 24 µm bis ≤ 500 µm auf das Substrat aufgetragen wird.

Weiterer Gegenstand der Erfindung sind die nach dem erfindungsgemäßen Verfahren beschichteten Gegenstände.
Im Folgenden wird das erfindungsgemäße Verfahren näher beschrieben.

Geeignete strahlenhärtbare Beschichtungsmittel für Schritt (1) enthalten
a) ein oder mehrere strahlenhärtbare Bindemittel
b) gegebenenfalls einen oder mehrere Reaktivverdünner, zur Reduzierung der Viskosität
c) ein oder mehrere Photoinitiatoren
d) gegebenenfalls Additive, Lichtschutzmittel, Stabilisatoren etc.
e) gegebenenfalls Pigmente
f) gegebenenfalls weitere Füllstoffe
g) gegebenenfalls Lösemittel
h) gegebenenfalls Mattierungsmittel

Als Bindemittel gemäß a) geeignet sind Polymere und/oder Oligomere, die mindestens eine, insbesondere mindestens zwei mit aktinischer Strahlung aktivierbare Doppelbindungen enthalten. Diese Polymere und/oder Oligomere weisen üblicherweise ein zahlenmittleres Molekulargewicht von 250 bis 50000 g/mol, bevorzugt von 500 bis 25000 g/mol insbesondere von 700 bis 5000 g/mol, auf. Bevorzugt weisen sie ein Doppelbindungsäquivalentgewicht von 100 bis 4000 g/mol besonders bevorzugt von 300 bis 2000 g/mol auf. Vorzugsweise werden sie in einer Menge von 5 bis 99 Gew.-%, bevorzugt 10 bis 90 Gew.-% besonders bevorzugt 20 bis 80 Gew.-%, jeweils bezogen auf den Festkörpergehalt der erfindungsgemäßen Beschichtungsmittel eingesetzt. Die Bestimmung des zahlenmittleren Molekulargewichts der Bindemittel erfolgt mit Hilfe der Gelpermeationschromatographie mit Polystyrol als Standard und Tetrahydrofuran als mobile Phase.

"(Meth)acrylat" bezieht sich im Rahmen dieser Erfindung auf entsprechende Acrylat- oder Methacrylatfunktionen oder auf eine Mischung beider.

Beispiele geeigneter strahlenhärtbarer Bindemittel entstammen den Oligomer- und/oder Polymerklassen der (meth)acrylfunktionellen (Meth)acrylcopolymeren, Polyether(meth)acrylaten, Polyester(meth)acrylaten, Epoxy(meth)acrylaten, Urethan(meth)acrylaten, Amino(meth)acrylaten, Melamin(meth)acrylaten, Silikon(meth)acrylaten und Phosphazen(meth)acrylaten. Bevorzugt werden Bindemittel eingesetzt, die frei von aromatischen Struktureinheiten sind. Bevorzugt werden Urethan(meth)acrylate, Phosphazen(meth)acrylate und/oder Polyester(meth)acrylate, besonders bevorzugt Urethan(meth)acrylate, ganz besonders bevorzugt aliphatische Urethan(meth)acrylate, eingesetzt.

Zur Reduzierung der Viskosität können den vorher beschriebenen Bindemitteln niedermolekulare doppelbindungshaltige Monomere, sogenannte Reaktivverdünner b), zugesetzt werden.

Als Reaktivverdünner b) können Verbindungen mitverwendet werden, die bei der Strahlenhärtung ebenfalls (co)polymerisieren und somit in das Polymernetzwerk eingebaut werden. Geeignete Reaktivverdünner b), die mindestens eine, insbesondere mindestens zwei mit aktinischer Strahlung aktivierbare Bindung(en) enthalten, sind olefinisch ungesättigte Monomere, bevorzugt vinyl aliphatische Monomere und Acrylate, insbesondere Acrylate, mit mindestens einer radikalisch polymerisierbaren Doppelbindung und vorzugsweise mit mindestens zwei radikalisch polymerisierbaren Doppelbindungen. Geeignete Reaktivverdünner werden im Detail in Römpp Lexikon Lacke und Druckfarben, Georg Thieme Verlag, Stuttgart, New York, 1998 "Reaktivverdünner", Seiten 491 und 492 beschrieben.

Exemplarisch seinen Ester der Acrylsäure oder Methacrylsäure, bevorzugt der Acrylsäure mit mono- oder mehrfachfunktionellen Alkoholen als Reaktivverdünner genannt. Als Alkohole eignen sich beispielsweise die isomeren Butanole, Pentanole, Hexanole, Heptanole, Octanole, Nonanole und Decanole, weiterhin cycloaliphatische Alkohole wie Isobornol, Cyclohexanol und alkylierte Cyclohexanole, Dicyclopentanol, arylaliphatischer Alkohole wie Phenoxyethanol und Nonylphenylethanol, sowie Tetrahydrofurfurylalkohole. Weiterhin können alkoxylierte Derivate dieser Alkohole verwendet werden. Geeignete zweiwertige Alkohole sind beispielsweise Alkohole wie Ethylenglykol, 1,2-Propandiol, 1,3-Propandiol, Diethylenglykol, Dipropylenglykol, die isomeren Butandiole, Neopentylglykol, 1,6-Hexandiol, 2-Ethylhexandiol und Tripropylenglykol oder auch alkoxylierte Derivate dieser Alkohole. Bevorzugte zweiwertige Alkohole sind 1,6-Hexandiol, Dipropylenglykol und Tripropylenglykol. Geeignete dreiwertige Alkohole sind Glycerin oder Trimethylolpropan oder deren alkoxylierte Derivate. Vierwertige Alkohole sind Pentaerythrit oder dessen alkoxylierte Derivate. Ein geeigneter sechswertiger Alkohol ist Dipentaerythrit oder dessen alkoxylierte Derivate. Besonders bevorzugt sind die alkoxylierten Derivate der genannten drei- bis sechswertigen Alkohole.

Die erfindungsgemäßen Beschichtungsmittel enthalten einen oder mehrere Fotoinitiatoren c). Der Fotoinitiator wird durch energiereiche elektromagnetische Strahlung, wie beispielsweise sichtbares Licht oder insbesondere UV-Strahlung, z.B. Licht der Wellenlänge 200 bis 700 nm aktiviert und initiiert dadurch die Polymerisation über die in den erfindungsgemäßen Beschichtungsmitteln enthaltenen mit aktinischer Strahlung aktivierbaren Gruppen.

Bevorzugt wird der Fotoinitiator aus der Gruppe, bestehend aus unimolekularen (Typ I) und bimolekularen (Typ II) Fotoinitiatoren ausgewählt. Geeignete Fotoinitiatoren des Typs II sind aromatische Ketonverbindungen wie z.B. Benzophenone in Kombination mit tertiären Aminen, Alkylbenzophenone, 4,4'-Bis(dimethylamino)benzophenon (Michlers Keton), Anthron und halogenierten Benzophenone oder Mischungen der genannten Typen. Als Fotoinitiatoren des Typs I sind beispielsweise Benzoine, Benzoinderivate, insbesondere Benzoinether, Benzilketale, Acylphosphinoxide, insbesondere2,4,6-Trimethylbenzoyl-diphenylphosphinoxid, Bisacylphosphinoxiden, Phenylglyoxylsäureestern, Campherchinon, α-Aminoalkylphenonen, α, α-Dialkoxyacetophenonen und α-Hydroxyalkylphenonen, geeignet.

Die Beschichtungsmittel können Additive d) enthalten. Geeignete Additive sind beispielsweise Lichtschutzmittel, wie UV-Absorber und reversible Radikalfänger (HALS), Antioxidantien, Entlüftungsmittel, Netzmittel, Emulgatoren, Slipadditive, Polymerisationsinhibitoren, Haftvermittler, Verlaufsmittel, filmbildende Hilfsmittel, Rheologiehilfsmittel, wie Verdicker und strukturviskose sogenannte "Sag Control Agents" (SCA), Flammschutzmittel, Korrosionsinhibitoren, Wachse, Sikkative und Biozide.

Diese und weitere geeignete Bestandteile werden in dem Lehrbuch »Lackadditive« von Johan Bieleman, Wiley-VCH, Weinheim, New York, 1998, in D. Stoye und W. Freitag (Editors), »Paints, Coatings and Solvents«, Second, Completely Revised Edition, Wiley-VCH, Weinheim, New York, 1998, »14.9. Solvent Groups«, Seiten 327 bis 373, beschrieben.

Die Beschichtungsmittel können gemäß e) auch pigmentiert sein. Vorzugsweise enthalten sie dann mindestens ein Pigment ausgewählt aus der Gruppe bestehend aus organischen und anorganischen, transparenten und deckenden, farb- und/oder effektgebenden sowie elektrisch leitfähigen Pigmenten. Geeignete Pigmente e) und Füllstoffe f) sind beispielsweise beschrieben in Lückert, Pigmente und Füllstofftabellen, Poppdruck, Langenhagen, 1994.

Optional können den Beschichtungsmitteln Lösemittel g) zugegeben werden. Geeignete Lösemittel sind gegenüber den vorhandenen funktionellen Gruppen des Beschichtungsmittels vom Zeitpunkt der Zugabe bis zum Ende des Verfahrens inert. Geeignet sind z.B. in der Lacktechnik verwendete Lösemittel wie Kohlenwasserstoffe, Alkohole, Ketone und Ester, z.B. Toluol, Xylol, Isooctan, Aceton, Butanon, Methylisobutylketon, Ethylacetat, Butylacetat, Tetrahydrofuran, N-Methylpyrrolidon, Dimethylacetamid, Dimethylformamid.

Die Beschichtungsmittel können auch Mattierungsmittel h) enthalten. Geeignete Mattierungsmittel sind z. B. Siliciumdioxid, welches auf die benötigte Teilchengröße für die entsprechende Beschichtung eingestellt ist. Alternativ können auch Harnstoff-Methanal Kondensate oder Mischungen auf Basis Polyamid 12 eingestzt werden.

Gemäß des erfindungsgemäßen Verfahrens wird im ersten Schritt (1) das Beschichtungsmittel nach den dem Fachmann bekannten Methoden auf ein geeignetes Substrat aufgetragen. Das Beschichtungsmittel wird in Schichtdicken (vor der Härtung) von ≥ 5 µm bis ≤ 650 µm, bevorzugt von ≥ 20 µm bis ≤ 600 µm, besonders bevorzugt von ≥ 24 µm bis ≤ 500 µm auf das Substrat aufgetragen.

Geeignete Substrate für das erfindungsgemäße Verfahren sind beispielsweise mineralische Substrate, Holz, Holzwerkstoffe, Metall, Kunststoff, fasergebundene Werkstoffe etc.

In Schritt (2) wird das strahlenhärtbare Beschichtungsmittel mit UV-Licht der Wellenlänge von ≥ 200 nm bis ≤ 420 nm, vorzugsweise von ≥ 280 nm bis ≤ 420 nm bestrahlt. Die erforderliche Strahlungsdosis liegt im Bereich von 25 bis 120 mJ/cm², vorzugsweise bei 30 bis 100 mJ/cm². In diesem Schritt (2) erfolgt eine sogenannte Vorgelierung des Beschichtungsmittels.

Als Strahlungsquellen für UV-Licht im angegebenen Wellenlängenbereich in Schritt (2) dienen beispielsweise UV-A emittierende Strahler (z.B. Leuchtstoffröhren, LED-Technologie oder Lampen, die z. B. von der Firma Panacol-Elosol GmbH, Steinbach, Bundesrepublik Deutschland, unter der Bezeichnung UV-H 254, Quick-Start UV 1200, UV-F 450, UV-P 250C, UV-P 280/6 oder UV-F 900 vertrieben werden), Hoch- oder Mitteldruckquecksilberdampflampen, wobei der Quecksilberdampf durch Dotierung mit anderen Elementen wie Gallium oder Eisen modifiziert sein kann, gepulste Lampen (unter der Bezeichnung UV-Blitzlichtstrahler bekannt) oder Halogenlampen. Weitere geeignete UV-Strahler oder -Lampen sind in R. Stephen Davidson, »Exploring the Science, Technology and Applications of U.V. and E.B. Curing«, Sita Technology Ltd., London, 1999, Chapter I, »An Overview«, Page 16, Figure 10, oder Dipl.-Ing. Peter Klamann, »eltosch System-Kompetenz, UV-Technik, Leitfaden für Anwender«, Seite 2, Oktober 1998, beschrieben. Die Strahler können ortsunbeweglich installiert sein, so dass das zu bestrahlende Gut mittels einer mechanischen Vorrichtung an der Strahlungsquelle vorbeibewegt wird oder die Strahler können beweglich sein und das zu bestrahlende Gut verändert bei der Vorgelierung seinen Ort nicht.

Vorzugsweise werden im erfindungsgemäßen Verfahren in Schritt (2) Hoch- oder Mitteldruckquecksilberdampflampen verwendet, wobei der Quecksilberdampf durch Dotierung mit anderen Elementen wie Gallium oder Eisen modifiziert sein kann.

Die Bestrahlung in Schritt (2) erfolgt vorzugsweise unter atmosphärischen Bedingungen, das heißt nicht unter Inertgasbedingungen und/oder sauerstoffreduzierter Atmosphäre.

Anschließend wird in Schritt (3) die aus Schritt (2) erhaltene Beschichtung mit UV-Licht der Wellenlänge von ≥ 120 nm bis ≤ 230 nm, vorzugsweise von ≥ 150 nm bis ≤ 225 nm, besonders bevorzugt von 172 nm bestrahlt, wobei eine Mikrofaltung erreicht wird.

Für Schritt (3) geeignete Strahlungsquellen sind Excimer UV-Lampen, die UV-Licht im Bereich von ≥ 120 nm bis ≤ 230 nm, vorzugsweise von ≥ 150 nm bis ≤ 225 nm, besonders bevorzugt von 172 nm emittieren. Die Mikrofaltung gemäß Schritt (3) muss unter einer sauerstoffabgereicherten Atmosphäre oder unter völligem Ausschluss von Sauerstoff, d.h. unter einer Inertgas-atmosphäre, durchgeführt werden. Besonders bevorzugt wird die Härtung in Schritt (3) unter einer Intertgasatmosphäre durchgeführt. Unter Inertgas wird ein Gas verstanden, das unter den angewandten Härtungsbedingungen durch die aktinische Strahlung nicht zersetzt wird, die Härtung nicht inhibiert und nicht mit den applizierten erfindungsgemäßen Beschichtungsmitteln reagiert. Vorzugsweise werden Stickstoff, Kohlendioxid, Verbrennungsgase, Helium, Neon oder Argon, besonders bevorzugt Stickstoff verwendet.
Dieser Stickstoff sollte nur geringste Mengen Fremdgase wie zum Beispiel Sauerstoff enthalten. Bevorzugt werden Reinheitsgrade von < 300 ppm Sauerstoff eingesetzt.

Die Endhärtung (Schritt (4)) der aus Schritt (3) erhältlichen Beschichtung erfolgt mittels aktinischer Strahlung wie beispielsweise UV-Strahlung, Elektronenstrahlung, Röntgenstrahlung oder Gammastrahlung. Bevorzugt sind UV-Strahlung im Wellenlängenbereich von ≥ 200 nm bis ≤ 420 nm, vorzugsweise von ≥ 280 nm bis ≤ 420 nm bei einer Strahlendosis von 80 bis 4000 mJ/cm², vorzugsweise von 80 bis 2000 J/cm², besonders bevorzugt von 80 bis 600 mJ/cm² und Elektronenstrahlung (150 bis 300 kV) mit einer Dosis von 10 bis 100 kGy, vorzugsweise von 20 bis 50 kGy. Als UV-Strahlungsquellen dienen insbesondere Hoch- und Mitteldruckquecksilberlampen wobei der Quecksilberdampf mit weiteren Elementen wie Gallium oder Eisen dotiert sein kann. Des Weiteren sind UV emittierende LEDs, lasergepulste Lampen, die unter der Bezeichnung UV-Blitzlichtstrahler bekannt sind, geeignet. Geeignete Elektronenstrahler sind die bekannten Strahler vom Scanner- oder Curtain-Typ.

Die Bestrahlung in Schritt (4) kann gegebenenfalls auch unter Ausschluss von Sauerstoff, z. B. unter Inertgas-Atmosphäre oder Sauerstoff-reduzierter Atmosphäre durchgeführt werden. Des Weiteren kann die Bestrahlung erfolgen, indem die Beschichtung mit für die Strahlung transparenten Medien abgedeckt wird. Beispiele hierfür sind z.B. Kunststofffolien. Für die Endhärtung in Schritt (4) mittels Elektronenstrahlung erfolgt die Bestrahlung vorzugsweise unter Inertgasbedingungen.

Bei der Härtung unter atmosphärischen Bedingungen können die Strahler ortsunbeweglich installiert sein, so dass das zu bestrahlende Gut mittels einer mechanischen Vorrichtung an der Strahlungsquelle vorbeibewegt wird oder die Strahler können beweglich sein und das zu bestrahlende Gut verändert bei der Endhärtung seinen Ort nicht.

Bei der Härtung unter Inertgasbedingungen sind die Strahler vorzugsweise ortsunbeweglich installiert, so dass das zu bestrahlende Gut mittels einer mechanischen Vorrichtung an der Strahlungsquelle vorbeibewegt wird.

In einer Ausführungsform des erfindungsgemäßen Verfahrens erfolgt die Endhärtung (4) mittels UV-Strahlung im Wellenlängenbereich von ≥ 200 nm bis ≤ 420 nm, vorzugsweise von ≥ 280 nm bis ≤ 420 nm. Die Strahlungsdosis beträgt 80 bis 4000 mJ/cm², vorzugsweise von 80 bis 2000 mJ/cm², besonders bevorzugt von 80 bis 600 mJ/cm².

In einer weiteren Ausführungsform des erfindungsgemäßen Verfahrens erfolgt die Endhärtung (4) mittels Elektronenstrahlung (70 bis 300 kV) unter Inertgasbedingungen. Die Strahlungsdosis beträgt 10 bis 100 kGy, bevorzugt 20 bis 50 kGy.

### Beispiele

Alle Prozentangaben beziehen sich sofern nicht abweichend angegeben auf Gewichtsprozent.
Bindemittel a1): aliphatisches allophanat-basiertes Urethanacrylat, Viskosität (23°C) 60 000 mPas, Mn = 1100 g/mol.
Bindemittel a2): aliphatisches Polyesteracrylat, Mn = 720 g/mol.

**Tabelle 1: Zusammensetzung der Beschichtungsmittel**

| | I [Gew.-%] | II [Gew.-%] | III [Gew.-%] | IV [Gew.-%] |
|---|---|---|---|---|
| Bindemittel a1) | 28,0 | 48,0 | | |
| Bindemittel a2) | | | 46,0 | 23,0 |
| Hexandioldiacrylat b) | 35,0 | 42,7 | 13,0 | 21,0 |
| Tripropylenglycoldiacrylat b) | | | 34,0 | 18,4 |
| Bis(2,4,6-trimethylbenzoyl)-Phenyl-phosphinoxid c) | 0,3 | | | 0,3 |
| 1-Hydroxy cyclo hexyl phenoyl keton c) | | 3,5 | 3,2 | |
| 2,4,6-Trimethylbenzoyl phosphinsäure ethylester c) | | 0,6 | 0,6 | |
| Benzophenon c) | | | 1,0 | |
| Dispergiermittel auf Basis eines Copolymers mit sauren Gruppen d) | 2,0 | | | |
| Dispergiermittel auf Basis eines Copolymers mit Füllstoff-affinen Gruppen d) | | | | 0,8 |
| Mattierungsmittel auf Basis gefällter Kieselsäuren h) | 2,0 | 2,0 | 2,0 | 10,6 |
| Entschäumer auf Basis Polysiloxane d) | 0,2 | 0,2 | 0,2 | 0,1 |
| sterisch gehinderter Amin-LichtStabilisator d) | 1,0 | 1,2 | | |
| Hydroxyphenyltriazin-Derivat d) | 1,5 | 1,8 | | |
| Titandioxid e) | 30,0 | | | 25,8 |
| | 100,0 | 100,0 | 100,0 | 100,0 |

Die vorstehend genannten Beschichtungsmittel I bis IV, im Folgenden auch Lackformulierung genannt, werden in einer Schichtdicke von 30 µm mittels eines Spiralrakels auf einer faserverstärkten Mineralplatte (Europakarton) appliziert und anschließend nach den folgenden Verfahren A1), A2), B1), B2), C1) und C2) mittels Strahlung gehärtet.
A1) Strahlenhärtung des Beschichtungsmittels durch Elektronenstrahlung (170 kV) (Vergleich).
A2) Strahlenhärtung mit UV-Strahlung (UV-Strahler der Fa. IST Nürtingen, DE, Hg-Mitteldruckstrahler) (Vergleich).
B1) Bestrahlung mit Excimer-Strahler (172 nm) zur Mikrofaltung, d.h. Mattierung der Beschichtung und anschließend Endhärtung mit Elektronenstrahlung (170 KV) (Vergleich)
B2) Bestrahlung mit Excimer-Strahler (172 nm) zur Mikrofaltung, d.h. Mattierung der Beschichtung und anschließend Endhärtung mit UV-Strahlung (UV-Strahler der Fa. IST, Nürtingen, DE, Hg-Mitteldruckstrahler) (Vergleich).
C1) Vorgelierung mit UV-Strahlung (UV-Strahler der Fa. IST, Nürtingen, DE, Gallium dotierter Hg-Mitteldruckstrahler), dann Bestrahlung mit Excimer-Strahler (172 nm) zur Mikrofaltung, d.h. Mattierung der Beschichtung und anschließend Endhärtung mit Elektronenstrahlung (170 kV).
C2) Vorgelierung mit UV-Strahlung (UV-Strahler der Fa. IST, Nürtingen, DE, Gallium dotierter Hg-Mitteldruckstrahler), dann Bestrahlung mit Excimer-Strahler (172 nm) zur Mikrofaltung, d.h. Mattierung der Beschichtung und anschließende Endhärtung mittels UV-Strahlung (UV-Strahler der Fa. IST Nürtingen, DE, Hg-Mitteldruckstrahler).

Die Strahlendosis wurde mit einem Radiometer der Fa. International Light Technologies, Peabody MA, USA gemessen.

**Tabelle 2: Ergebnisse der Härtungsverfahren A1, A2, B1, B2, C1 und C2**

| | **Lackformulierung** | **Härtungsverfahren** | **UV-Dosis (Gelierung)** | **Dosis (Endhärtung)** | **Glanzgrad 60°¹** |
|---|---|---|---|---|---|
| 1 (V) | I | A1 | - | 45 kGy | 87 E |
| 2 (V) | I | B1 | - | 45 kGy | 5E Oberfläche nicht i.O.² |
| 3 | I | C1 | 50-100 mJ/cm² | 45 kGy | 5E Oberfläche i.O.³ |
| 4 (V) | II | A1 | - | 45 kGy | 87 E |
| 5 (V) | II | A2 | - | 250-300 mJ/cm² | 85 E |
| 6 (V) | II | B1 | - | 45 kGy | 5 E Oberfläche nicht i.O.² |
| 7 (V) | II | B2 | - | 250-300 mJ/cm² | 5 E Oberfläche nicht i.O.² |
| 8 | II | C1 | 50-100 mJ/cm² | 45 kGy | 5 E Oberfläche i.O.³ |
| 9 | II | C2 | 50-100 mJ/cm² | 250-300 mJ/cm² | 5 E Oberfläche i.O.³ |
| 10 (V) | III | A1 | - | 45 kGy | 87 E |
| 11 (V) | III | A2 | - | 250-300 mJ/cm² | 85 E |
| 12 (V) | III | B1 | - | 45 kGy | 5 E Oberfläche nicht i.O.² |
| 13 (V) | III | B2 | - | 250-300 mJ/cm² | 5 E Oberfläche nicht i.O.² |
| 14 | III | C1 | 50-100 mJ/cm² | 45 kGy | 5 E Oberfläche i.O.³ |
| 15 | III | C2 | 50-100 mJ/cm² | 250-300 mJ/cm² | 5 E Oberfläche i.O.³ |
| 16 (V) | IV | A1 | - | 45 kGy | 87 E |
| 17 (V) | IV | B1 | - | 45 kGy | 5 E Oberfläche nicht i.O.² |
| 18 | IV | C1 | 50-100 mJ/cm² | 45 kGy | 5 E Oberfläche i.O.³ |

| | | | | | |
|---|---|---|---|---|---|
| (V): Vergleich ¹Der Glanzgrad bei 60° wurde durch Glanzmessung gemäß DIN EN ISO 2813 bestimmt. Die Angabe E bedeutet Glanzeinheiten. ²Oberfläche nicht i.O. bedeutet: Oberfläche der Beschichtung nicht in Ordnung, d.h. nach in Augenscheinnahme der Oberfläche durch den Fachmann weist die Beschichtung eine unregelmäßige Struktur mit Runzeln auf. ³Oberfläche i.O. bedeutet: Oberfläche der Beschichtung in Ordnung, d.h. nach in Augenscheinnahme der Oberfläche durch den Fachmann weist die Beschichtung eine homogene Struktur ohne Runzelbildung auf. | | | | | |

Alle Formulierungen I-IV liefern nach dem erfindungsgemäßen Verfahren (C1, C2) homogene matte Beschichtungen. Die Ergebnisse sind gleich, unabhängig davon, ob die Endhärtung in Schritt (4) mit UV-Strahlung oder Elektronenstrahlung erfolgte.

Einfache Strahlenhärtung (A1, A2) der Formulierungen I-IV zeigt keine Mattierungseffekte in der Oberfläche der Beschichtung.

Die Mattierung der Beschichtung der Formulierungen I-IV mit Excimer-Strahlung (B1, B2) führt zwar zu matten Beschichtungen, jedoch ist die Oberflächenstruktur nicht zufriedenstellend, da sich eine unregelmäßige Oberflächenstruktur mit Runzeln ausbildet.

Versuche zu unterschiedlichen Schichtdicken der Beschichtungsmittel

**Tabelle 3: Beschichtungsmittel V**

| | V [Gew.Tle.] |
|---|---|
| Bindemittel a1) | 48,0 |
| Hexandioldiacrylat b) | 44,9 |
| 1-Hydroxy cyclo hexyl phenoyl keton c) | 3,5 |
| 2,4,6-Trimethylbenzoyl phosphinsäure ethylester c) | 0,6 |
| Entschäumer auf Basis Polysiloxane b) | 0,2 |
| bis(1-octyloxy-2,2,6,-tetramethyl-4-piperidyl) sebacate d) | 1,2 |
| 2-[4-[(2-Hydroxy-3-dodecyloxypropyl)oxy]-2-hydroxyphenyl]-4,6-bis(2,4-dimethylphenyl)-1,3,5-triazine & 2-[4-[(2-Hydroxy-3-tridecyloxypropyl)oxy]-2-hydroxyphenyl]-4,6-bis(2,4-dimethylphenyl)-1,3,5-triazine d) | 1,6 |

Das Beschichtungsmittel V wurde in einer Schichtdicke von 24 µm mittels eines Spiralrakels auf einer faserverstärkten Mineralplatte (Europakarton) bzw. in einer Schichtdicke von 150 µm, 200 µm, 300 µm, 500 µm und 700 µm mittels eines Aufziehrahmens auf einer faserverstärkten Mineralplatte (Europakarton) aufgetragen und nach den vorgennannten Härtungsverfahren B1) bzw. C1) gehärtet.

**Tabelle 4: Härtungsverfahren in Abhängigkeit der aufgetragenen Schichtdicken**

| | **Schichtdicke [µm]** | **Härtungsverfahren** | **UV-Dosis (Gelierung)** | **Dosis (Endhärtung)** | **Beschichtung¹** |
|---|---|---|---|---|---|
| 19 (V) | 24 | B1 | - | 45 kGy | Matt, Oberfläche nicht i.O.² |
| 20 | 24 | C1 | 100 mJ/cm² | 45 kGy | Matt, Oberfläche i.O.³ |
| 21 | 150 | C1 | 100 mJ/cm² | 45 kGy | Matt, Oberfläche i.O.³ |
| 22 | 200 | C1 | 100 mJ/cm² | 45 kGy | Matt, Oberfläche i.O.³ |
| 23 | 300 | C1 | 100 mJ/cm² | 45 kGy | Matt, Oberfläche i.O.³ |
| 24 | 500 | C1 | 100 mJ/cm² | 45 kGy | Matt, Oberfläche i.O.³ |
| 25 (V) | 700 | C1 | 100 mJ/cm² | 45 kGy | Keine Mattierung, |

| | | | | | |
|---|---|---|---|---|---|
| (V): Vergleich ¹Die Beschichtung wurde nach der Härtung durch in Augenscheinnahme von einem Fachmann beurteilt. ²Oberfläche nicht i.O. bedeutet: Oberfläche der Beschichtung nicht in Ordnung, d.h. nach in Augenscheinnahme der Oberfläche durch den Fachmann weist die Oberfläche eine unregelmäßige Struktur mit Runzeln auf. ³Oberfläche i.O. bedeutet: Oberfläche der Beschichtung in Ordnung, d.h. nach in Augenscheinnahme der Oberfläche durch den Fachmann weist die Oberfläche eine homogene Struktur ohne Runzelbildung auf. | | | | | |

Die nach dem erfindungsgemäßen Verfahren hergestellten Beschichtungen liefern auch bei Schichtdicken von 24 µm homogen matte Oberflächen (Nr. 20), wohingegen das bislang bekannte Verfahren bei Schichtdicken von 24 µm zwar matte Oberflächen liefert, die allerdings eine unregelmäßige Struktur mit Runzeln aufweist (Nr. 19), also nicht akzeptabel ist.

Die nach dem erfindungsgemäßen Verfahren hergestellten Beschichtungen (Nr. 21 bis 24) weisen bis zu einer Schichtdicke von 500 µm homogen matte Oberflächen auf. Bei einer Schichtdicke von 700 µm erfolgt jedoch auch nach dem erfindungsgemäßen Verfahren keine Mattierung der Oberfläche mehr (Nr. 25).

## Patentansprüche

1. Verfahren zur Herstellung matter Oberflächen **dadurch gekennzeichnet, dass**
(1) ein strahlenhärtbares Beschichtungsmittel auf ein Substrat aufgetragen wird,
(2) die strahlenhärtbare Beschichtung aus Schritt (1) mit UV-Licht der Wellenlänge von ≥ 200 nm bits ≤ 420 nm bei einer Strahlendosis von 25 bis 120 mJ/cm² bestrahlt wird,
(3) die aus Schritt (2) erhaltene Beschichtung mit UV-Licht der Wellenlänge von ≥ 120 nm bis ≤ 230 nm bestrahlt wird,
(4) die aus Schritt (3) erhältliche Beschichtung mittels aktinischer Strahlung endgehärtet wird,
wobei in Schritt (1) das Beschichtungsmittel in einer Schichtdicke von ≥ 24 µm bis ≤ 500 µm auf das Substrat aufgetragen wird.

2. Verfahren gemäß Anspruch 1, **dadurch gekennzeichnet, dass** in Schritt (2) die Bestrahlung mit UV-Licht der Wellenlänge von ≥ 280 nm bis ≤ 420 nm erfolgt.

3. Verfahren gemäß Anspruch 1 oder 2, **dadurch gekennzeichnet, dass** die Bestrahlung in Schritt (3) mit UV-Licht der Wellenlänge von ≥ 150 nm bis ≤ 225 nm erfolgt.

4. Verfahren gemäß einem der Ansprüche 1 bis 3, **dadurch gekennzeichnet, dass** die Strahlendosis in Schritt (2) 30 bis 100 mJ/cm² beträgt.

5. Verfahren gemäß einem der Ansprüche 1 bis 4, **dadurch gekennzeichnet, dass** die Endhärtung in Schritt (4) mit UV-Strahlung bei einer Wellenlänge von ≥ 200 nm bis ≤ 420 nm bei einer Strahlungsdosis von 80 bis 4000 mJ/cm² erfolgt.

6. Verfahren gemäß einem der Ansprüche 1 bis 4, **dadurch gekennzeichnet, dass** die Endhärtung in Schritt (4) mit Elektronenstrahlung der Dosis 10 bis 100 kGy erfolgt.

7. Verfahren gemäß einem der Ansprüche 1 bis 6, **dadurch gekennzeichnet, dass** in Schritt (1) ein Beschichtungsmittel enthaltend
a) ein oder mehrere strahlenhärtbare Bindemittel,
c) ein oder mehrere Fotoinitiatoren
eingesetzt wird.

8. Verfahren gemäß Anspruch 7, **dadurch gekennzeichnet, dass** als strahlenhärtbares Bindemittel a) ein Oligomer und/oder Polymer ausgewählt aus der Gruppe bestehend aus (Meth)acrylcopolymeren, Polyether(meth)acrylaten, Polyester(meth)acrylaten, Epoxy(meth)acrylaten, Urethan(meth)acrylaten, Amino(meth)acrylaten, Melamin(meth)acrylaten, Silikon(meth)acrylaten und Phosphazen(meth)acrylaten eingesetzt wird.

9. Verfahren gemäß einem der Ansprüche 1 bis 8, **dadurch gekennzeichnet, dass** Schritt (2) unter atmosphärischen Bedingungen und Schritt (3) unter Inertgasatmosphäre erfolgen.

10. Substrate, die nach dem Verfahren gemäß einem der Ansprüche 1 bis 9 beschichtet wurden.

## Claims

1. Process for producing mat surfaces, **characterized in that**
(1) a radiation-curable coating agent is applied to a substrate,
(2) the radiation-curable coating of step (1) is irradiated with UV-light of the wavelength ≥ 200 nm to ≤ 420 nm at a radiation dose of 25 to 120 mJ/cm²,
(3) the coating obtained from step (2) is irradiated with UV-light of the wavelength ≥ 120 nm to ≤ 230 nm,
(4) the coating obtainable from step (3) is end-cured by means of actinic radiation,
wherein in step (1) the coating agent is applied to the substrate in a film thickness of ≥ 24 µm to ≤ 500 µm.

2. Process according to claim 1, **characterized in that** in step (2) the irradiation takes place with UV-light of the wavelength ≥ 280 nm to ≤ 420 nm.

3. Process according to claim 1 or 2, **characterized in that** the irradiation in step (3) takes place with UV-light of the wavelength ≥ 150 nm to ≤ 225 nm.

4. Process according to any one of claims 1 through 3, **characterized in that** the radiation dose in step (2) is 30 to 100 mJ/cm².

5. Process according to any one of claims 1 through 4, **characterized in that** the final curing in step (4) takes place with UV-radiation at a wavelength ≥ 200 nm to ≤ 420 nm at a radiation dose of 80 to 4,000 mJ/cm².

6. Process according to any one of claims 1 through 4, **characterized in that** the final curing in step (4) takes place with electron radiation of the dose 10 to 100 kGy.

7. Process according to any one of claims 1 through 6, **characterized in that** in step (1) a coating agent containing
a) one or more radiation-curable binders,
c) one or more photoinitiators
is used.

8. Process according to claim 7, **characterized in that** as radiation-curable binder a) an oligomer and/or polymer selected from the group of (meth)acrylate copolymers, polyether(meth)acrylates, polyester(meth)-acrylates, epoxy(meth)acrylates, urethane(meth)acrylates, amino(meth)-acrylates, melamine(meth)acrylates, silicone(meth)acrylates and phosphazene(meth)acrylates is used.

9. Process according to any one of claims 1 through 8, **characterized in that** step (2) takes place under atmospheric conditions and step (3) under an inert gas atmosphere.

10. Substrates which were coated according to the process according to any one of claims 1 through 9.

## Revendications

1. Procédé pour la production d'une surface mate **caractérisé en ce que**
(1) un agent de revêtement durcissable par rayonnement est appliqué sur un substrat,
(2) le revêtement durcissable par rayonnement de l'étape (1) est irradié par une lumière UV à longueur d'onde de ≥ 200 nm à ≤ 420 nm à une dose de rayonnement de 25 à 120 mJ/cm²,
(3) le revêtement obtenu à l'étape (2) est irradié avec une lumière UV à une longueur d'onde ≥ 120 nm à ≤ 230 nm,
(4) le revêtement obtenu à l'étape (3) est finalement durci au moyen d'un rayonnement actinique,
dans lequel dans l'étape (1) l'agent de revêtement est appliqué sur le substrat avec une épaisseur de couche de ≥ 24 µm à ≤ 500 µm.

2. Procédé selon la revendication 1, **caractérisé en ce que** dans l'étape (2) l'irradiation est réalisée avec une lumière UV à une longueur d'onde de ≥ 280 nm à ≤ 420 nm.

3. Procédé selon la revendication 1 ou 2, **caractérisé en ce que** l'irradiation dans l'étape (3) est réalisée avec de la lumière UV à une longueur d'onde de ≥ 150 nm à ≤ 225 nm.

4. Procédé selon l'une des revendications 1 à 3, **caractérisé en ce que** la dose de rayonnement dans l'étape (2) est de 30 à 100 mJ/cm².

5. Procédé selon l'une des revendications 1 à 4, **caractérisé en ce que** le durcissement final dans l'étape (4) est réalisé avec un rayonnement UV à une longueur d'onde de ≥ 200 nm à ≤ 420 nm à une dose d'irradiation de 80 à 4000 mJ/cm².

6. Procédé selon l'une des revendications 1 à 4, **caractérisé en ce que** le durcissement final dans l'étape (4) est réalisé avec un rayonnement d'électrons de dose de 10 à 100 kGy.

7. Procédé selon l'une des revendications 1 à 6, **caractérisé en ce que**, dans l'étape (1), est utilisé un agent de revêtement comprenant
a) un ou plusieurs agent(s) liant(s) durcissable(s) par rayonnement,
c) un ou plusieurs photoinitiateurs.

8. Procédé selon la revendication 7, **caractérisé en ce que**, comme agent liant durcissable par rayonnement, est utilisé a) un oligomère et/ou polymère sélectionné dans le groupe constitué des copolymères de (méth)acrylates, (méth)acrylates de polyéther, (méth)acrylates de polyester, (méth)acrylates d'époxy, (méth)acrylates d'uréthane, amino(méth)acrylates, (méth)acrylates de mélamine, (méth)acrylates de silicone et (méth)acrylates de phosphazène.

9. Procédé selon l'une des revendications 1 à 8, **caractérisé en ce que** l'étape (2) est réalisée dans des conditions atmosphériques et **en ce que** l'étape (3) est réalisée sous une atmosphère de gaz inerte.

10. Substrats, qui ont été revêtus suivant le procédé selon l'une des revendications 1 à 9.
